# EUROPEAN PATENT APPLICATION

(11) **EP 2 341 683 A1**
(43) Date of publication of application: **06.07.2011**
(21) Application number: 09306345.1
(22) Date of filing: 30.12.2009
(51) Int. Cl.: H04L 29/06, H04L 12/56

(54) **Method of and apparatus for controlling traffic in a communication network**

(71) Applicant: FRANCE TELECOM, 75015 Paris (FR)
(72) Inventor: Saino, Lorenzo, London, W14 0AH (GB)
(74) Representative: Cabinet Plasseraud

(57) **Abstract**

A method of and a network entity for controlling traffic in a network, comprising: identifying the presence of undesirable traffic in the network; determining the route taken by the undesirable traffic through the network from the source of an attack to the target of the attack according to a topology of the network; identifying any operable attack mitigation entities present in the route taken by the undesirable traffic; selecting, according to a predetermined criteria, at least one optimal operable mitigation entity from among the identified mitigation entities for disrupting the flow of the malicious traffic to the target; and requesting the at least one optimal mitigation entity to act to disrupt the flow of the malicious traffic to the target.

## Description

### Field of the Invention

The present invention relates in general to a method and apparatus for controlling traffic in a data communication network. Particularly but not exclusively the invention relates to the control of traffic constituting a malicious attack on a target in the network.

### Background of the Invention

Internet Protocol (IP) networks are in widespread use around the world. The vast majority of data networks currently deployed are based on Internet Protocol (IP). For instance, the Internet is simply an interconnection of heterogeneous IP networks. In addition, IP networks are also increasingly being adopted for the transport of real-time delay-sensitive traffic, such as voice and video streaming. Most of the telecommunications operators worldwide are planning to or have already started deploying Next Generation Networks (NGNs), in which IP networks are employed for carrying any kind of traffic, from delay-sensitive real-time traffic such as voice and video-streaming to non-real-time traffic, such as e-mails and web traffic.

IP networks provide large flexibility and scalability. Their design allows the implementation of intelligent functionalities at the edge of the network (i.e. in the hosts or endpoints). As a result, the core elements (i.e. the routers) are only concerned with the routing of the traffic based on source and destination IP addresses, regardless of the content of the packets.

In spite of the significant advantages provided by IP networks, however, there are a series of issues and technical challenges that should be seriously considered in designing and deploying an IP network.

One of these issues regards the security of the network. More specifically, a well-designed IP network should provide adequate protection to computer systems or mission-critical network portions against malicious attacks originating from computer systems directly or indirectly connected to that network.

These attacks may be carried out for different reasons. Some types of attacks, known as Denial of Service (DoS) attacks have the aim of preventing targeted computer systems from providing or receiving specific network services. As an example, an attacker may attack a web server with the aim of preventing network users from accessing the web resources stored on it. Other attacks can be carried out to penetrate computer systems with the aim of illegally obtaining confidential information, such as authentication credentials or business secrets.

To protect network portions or computer systems from the abovementioned attacks, an effective countermeasure may typically consist in deploying network firewalls. Firewalls are devices which are generally installed in correspondence of network bottlenecks and whose main task is to monitor the traffic flowing through them and to decide whether to drop it or forward it based on some pre-defined user policies, sometimes referred to as rulesets.

Firewalls include software firewalls and network firewalls. Software firewalls are software applications installed on computer machines that block undesired network traffic to be generated/received by the machine only. Network firewalls are devices used to protect entire network segments. They are generally installed at the boundary between a trusted sub-network and an untrusted sub-network. For example, enterprises could use these firewall to protect their LAN from attacks coming from the public Internet.

Parameters that can be specified in the definition of firewall rulesets are, for instance, source/destination IP address, transport-layer protocol (e.g. TCP, UDP or SCTP) or source/destination transport-layer port.

In addition, state-of-the-art network firewalls are able to change dynamically their behaviour on the basis of specific events taking place. For instance, a firewall can monitor the establishment of a media session (e.g. a Session Initiation Protocol (SIP) session) and, upon successful establishment of that session, allow the transfer of related media traffic and then block it again after the tear-down of the session. Other state-of-the-art network firewalls are able to analyse the traffic normally allowed by static policies and block it in the case where the traffic matches with characteristic patterns of well-known malicious attacks.

However, there are certain classes of attacks that cannot be effectively mitigated by state-of-the-art network firewall systems.

One category of attacks poorly addressed by state-of-the-art network firewalls is represented by the Denial of Service (DoS) attacks whose target is the overloading of network resources. In fact, in these attacks, the attacker (or a network of attackers) sends an extremely large quantity of apparently legitimate traffic to the victim, with the aim of overloading its network resources, e.g. by saturating the capacity of network links or router processing capacity.

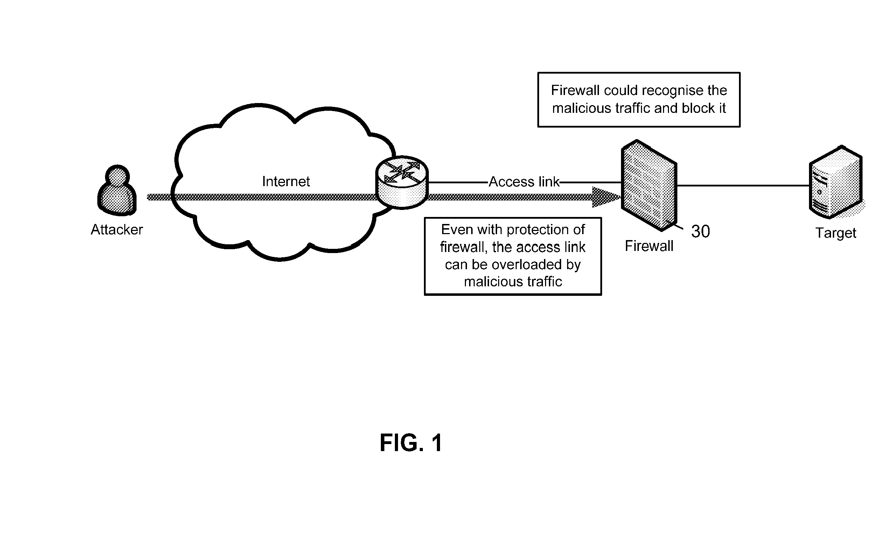

In these kind of attacks, with reference to FIG. 1 even though a network firewall 30 is able to recognise the threat and prevent it from being transferred up to the target, the malicious traffic would still be able to reach the firewall's network interface and potentially overload the network resources located between the attacker and the firewall, such as the firewall's network link. Consequently, legitimate traffic would be affected by the congestion caused by malicious traffic and would be lost or severely delayed. Furthermore, these attacks are particularly effective because network firewalls are generally located at network bottlenecks, such as the access links between an Internet Service Provider's (ISP) network and a private corporate Local Area Network (LAN). As a result, it is possible to exploit the larger capacity of the provider's network to convey an unmanageable amount of traffic to the firewall's reduced capacity link.

Another category of attacks poorly addressed by state-of-the-art network firewalls are those carried out within an encrypted tunnel, such as IPSec, Secure SHell (SSH) or Secure Socket Layer / Transport Layer Security (SSL/TLS) tunnels. In these cases, the traffic can be encrypted and decrypted only by endpoints and, therefore, it is impossible for a firewall located in the path to inspect the content of the packets and identify potential security threats. An example of these attacks could be represented by attempts of penetration or DoS attacks carried out against a web server using HTTPS (HTTP over SSL/TLS) protocol.

### Summary of the Invention

To better address one or more of the foregoing concerns, a first aspect of the invention provides a method of controlling the flow of traffic in a network comprising: identifying the presence of undesirable traffic in the network; determining the route taken by the undesirable traffic through the network from the source of an attack to the target of the attack according to a topology of the network; identifying any operable attack mitigation entities present in the route taken by the undesirable traffic; selecting, according to a predetermined criteria, at least one optimal operable mitigation entity from among the identified mitigation entities for disrupting the flow of the malicious traffic to the target; and requesting the at least one optimal mitigation entity to act to disrupt the flow of the malicious traffic to the target.

A second aspect of the invention provides a network entity for controlling traffic in a network, the network entity comprising: a memory for storing information on the topology of the network and operable attack mitigation entities in the network; message exchange means for exchanging messages with other network entities in the network, a route processor for determining the route taken by undesirable traffic through the network from the source of an attack to the target of the attack according to the topology of the network and for identifying any operable attack mitigation entities present in the route taken by the undesirable traffic; a selector for selecting, according to a predetermined criteria, at least one optimal operable mitigation entity from among the identified mitigation entities for disrupting the flow of the malicious traffic to the target; and control means for controlling the at least one optimal mitigation entity to act to disrupt the flow of the malicious traffic to the target.

In embodiments of the invention the method or the network entity may include one or more of the following features:
■ the selected operable attack mitigation entity may be a firewall which is requested to reduce the flow of traffic by blocking the traffic; or a traffic shaper which is requested to reduce the flow of traffic by slowing the traffic down.
■ the operable attack mitigation entity located nearest the source of the attack may be selected.
■ the network entity determining the route taken by the malicious traffic may be connected to one or more routers of the network and is configured to appear as a router to the or each router such that it receives notifications about links in the network from the or each router thereby enabling it to acquire knowledge of the current network topology.
■ the IP address of the source of the attack and the IP address of the target of the attack may be identified and used to determine the route taken by the malicious traffic through the network.
■ the timestamp of the attack may be used to determine the host of the attack in the case where the source IP address is shared between one or more hosts.
■ if the source of the attack is a mobile node a Home Address and/or a care of Address of the mobile node may be used to determine the source of the attack.
■ a plurality of routes through the network from the source of an attack to the target of the attack may be determined and an optimal operable mitigation entity may be selected for each of the determined routes, and wherein each of the optimal operable mitigation entities is requested to act to disrupt the flow of traffic.
■ the selector is configured to select the operable attack mitigation entity located nearest the source of the attack.
■ the network entity may be connected to one or more routers of the network and may be configured to appear as a router to the or each router such that it receives notifications about links in the network from the or each router thereby enabling it to acquire knowledge of the current network topology.
■ the network entity may be configured to transmit OSPF messages having a different router ID for each network interface of the network entity.
■ the network entity may be configured to be seen as by other routers in the network as an undesirable router for transferring traffic through the network.
■ the route processor may be configured to recalculate potential traffic flow routes in the case where a change in network topology occurs.

At least part of the methods according to the invention may be computer implemented. The methods may be implemented in software on a programmable apparatus. They may also be implemented solely in hardware or in software, or in a combination thereof.

Since the present invention can be at least partially implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a schematic diagram illustrating a firewall blocking malicious traffic;
Figures 2A to 2E are schematic diagrams illustrating the control of traffic in a network according to an embodiment of the invention;
Figure 3 is a flow chart illustrating steps of a method of controlling traffic in a network according to an embodiment of the invention;
Figures 4A and 4B are schematic diagrams illustrating possible locations of a attack mitigation entity in a network;
Figure 5 is a flow chart illustrating steps of a method of controlling traffic in a network according to an embodiment of the invention;
Figure 6 is a flow chart illustrating steps of a method of controlling traffic in a network according to an alternative embodiment of the invention;
Figure 7 is a flow chart illustrating steps of a method of controlling traffic in a network according to a further embodiment of the invention;
Figure 8 illustrates the exchange of messages between the traffic control manager and connected routers for updating the network topology according to an embodiment of the invention; and
Figure 9 is a schematic diagram of a traffic control manager according to an embodiment of the invention.

### Detailed description

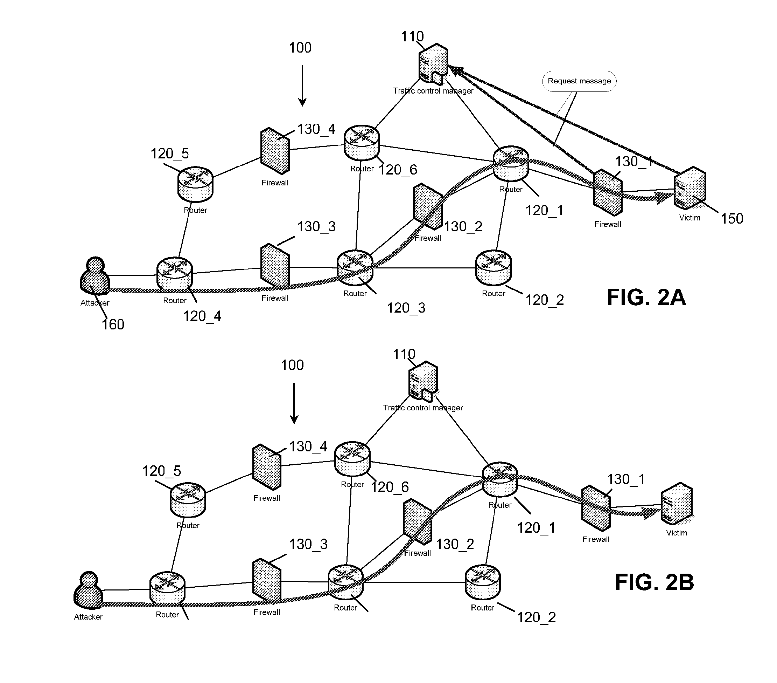

Embodiments of the invention will be described with reference to the figures. Figure 2A illustrates some of the main components of a network 100 in which traffic may be controlled according to an embodiment of the invention. The network 100 comprises a traffic control manager 110 connected the rest of the network 100 by means of routers 120_1 and 120_6. The routers 120_1 and 120_6 are connected to other routers 120_i in the network. Firewalls 130_i are interposed in the network 100 between some routers 120_i. A victim 150 constituting a target of an attack from an attacker 160 is connected to the network 100 via a firewall 130_1. In some embodiments of the invention the network 100 may include a traffic shaper, a proxy server or an Application Layer Gateway (ALG).
- The traffic control manager, 110 is capable of exchanging messages with other network entities of the network 100 such as the routers 120_i or the firewalls 130_i and can remotely control devices such as firewalls 130_i located in a specific network administrative domain.
- A module embedded in a generic network node (e.g. a router120_i, a firewall 130_i, an application server or a host) is capable of sending messages to the traffic control manager 110, if certain conditions are met.
- A module embedded in a network node has the capability of influencing the routing or forwarding of IP packets. This node could be, for instance, a router 120_i, a firewall 130_i, a traffic shaper, a proxy server or an Application Layer Gateway (ALG). This module is capable of receiving messages from the traffic control manager 110 and controlling the packet handling behaviour of the entity in which it is embedded, based on the content of the messages received from the traffic control manager

In the non-limiting example illustrated in Figure 2A the traffic control manager is an IP network node 110, comprising one or more network interfaces provisioned with one or more IP addresses and is locally connected to two routers 120_1 and 120_6. The traffic control manager 110 runs an application implementing the behaviour which will be described in what follows. It will be appreciated that in alternative embodiments of the invention the traffic control manager 110 could be also implemented as a logical entity embedded in another IP node rather than being a physical entity.

The traffic control manager 110 has the following capabilities:
It has administrative rights to remotely access a number of firewalls 130 or other attack mitigation devices of the network 100 and is able to enforce policies on packet routing or forwarding on network entities such as firewalls 130 traffic shapers, gateways or proxy servers, located in the network 100.
^{~} It has accurate knowledge of the topological location of the abovementioned devices within the network 100.
^{~} It has accurate and up-to-date knowledge of the topology and of the end-to-end routes related to the network in which the abovementioned devices are located.

The traffic control manager 110 can acquire the knowledge of the location of firewalls 130 (or other devices) present in the network 100 in a number of ways. In one embodiment of the invention an option would consist in statically providing the traffic control manager 110 with the location of the firewalls 130_i in the network 100. Such an option would not pose issues in terms of scalability or flexibility if it is assumed that firewalls 130_i are not frequently moved across the network 100 after their initial deployment. In another embodiment of the invention another option could consist in the firewalls 130 sending messages to the traffic control manager 110 , for instance at bootstrap or periodically, notifying their status and their location within the network 100. Such a mechanism, would be more suitable if the network topology and the location of firewall 130_i is likely to change frequently.

Whichever method is used to provide firewall location information to the traffic control manager is not critical for the performance of the system. It is important that the firewall location information provided to the traffic control manager 100 clearly specifies the network elements of the network 100 between which the firewall 130 is located, to ensure that the traffic control manager 100 can map the exact location of the firewall 130 in the network topology.

For this reason, the firewall location information provided to the traffic control manager 110 should preferably adhere to certain syntax specifications. More specifically, the firewall location information can be presented in one of the following formats.

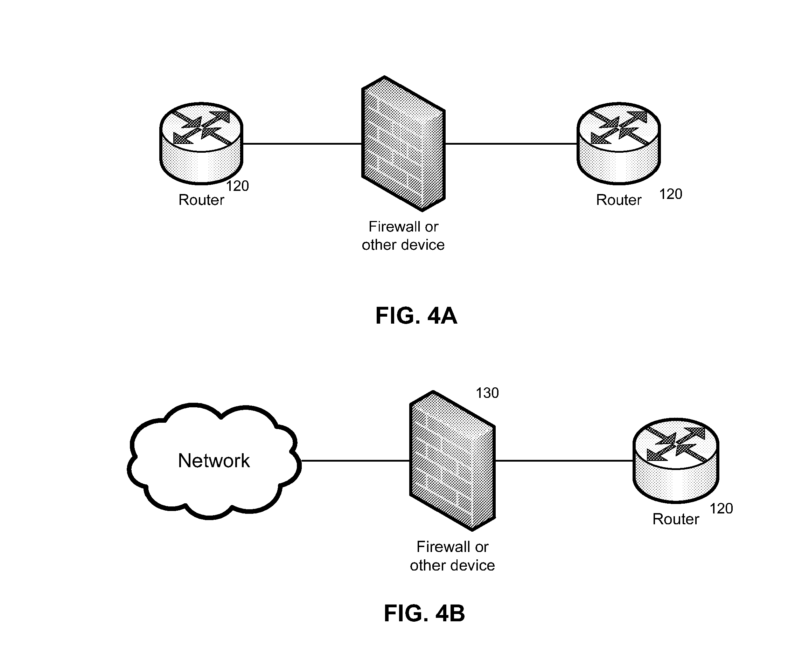

^{~} With reference to FIG. 4A , if the firewall 130 is located on a point-to-point link between two routers 120, the location information can be provided as the addresses of the two routers between which it is located.

^{~} With reference to FIG. 4B, if the firewall 130 is located on a transient or on a stub link, the location information can be provided as the address of the stub/transient network and the address of the router 120 between which it is located.

The traffic control manager 110 can also acquire the instantaneous topology and end-to-end routes of the network 100 in different ways. However, in addition to the location of the firewalls 130_i, network topology can change dynamically due to failures of links or nodes. As a consequence, the routes taken by specific traffic flows can also change dynamically. The mechanisms though which the traffic control manager acquires understanding of the network topology (and, subsequently of the routes taken by traffic flows) depends on the routing protocols used in the network.

If the network uses a link-state routing protocol, such as Open Shortest Path First (OSPF), the traffic control manager can exploit the link state information exchanged by network routers to build an up-to-date map of the network topology and compute end-to-end routes.

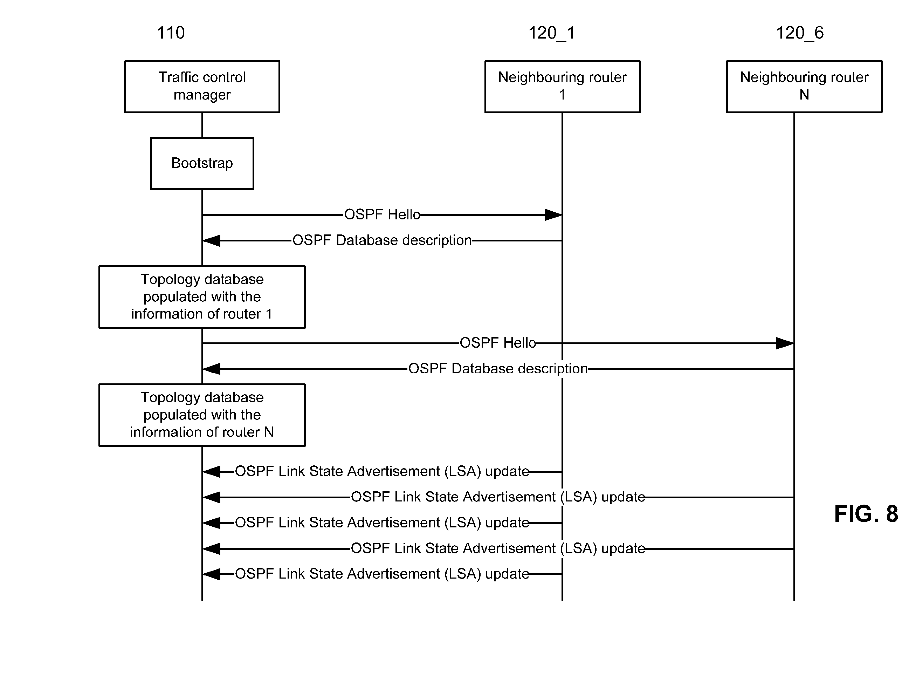

With reference to FIG. 8 in the case where the network 100 is using OSPF as routing protocol, the traffic control manager 110 can discover the network topology by running an OSPF instance, as if it were a router. As a consequence, it can discover adjacent routers 120_1 and 120_6 which can forward to it OSPF Link State Advertisement (LSA) update messages. By analysing the content of those LSA messages, the traffic control manager 110 is then able to build a topological database of the network 100. Moreover the traffic control manager 110 may determine the network routes by running a Dijkstra algorithm on that database.

To accomplish this task, the traffic control manager 110 should be equipped with at least one network interface. However, it may be recommendable to provide it with multiple network interfaces and connect each of the network interfaces to different sub-networks of the network 100 in order to maximise the number of routers 120 adjacent to the traffic control manager 110. The rationale for this lies in the fact that a higher number of adjacent routers 120 increases the speed of LSA update message flooding, thereby increasing the responsiveness of the traffic control manager 110 to mutations in the network topology due, for instance, to failures. In addition, connecting the traffic control manager 110 to multiple sub-networks with multiple links increase its resiliency against network failures. Furthermore, in this configuration, the traffic control manager 110 could also improve the performance of the entire network 100 routing by helping to forward LSA update messages among the routers 120 adjacent to it.

However, the multi-interface configuration explained above could lead to the consequence that adjacent routers 120 could use the traffic control manager 110 itself as a router to forward IP packets to other destinations. This scenario may be undesirable because it would increase the usage of the traffic control manager's network links and processing resources. To avoid this scenario two methods can be applied.

^{~} The first solution would consist in applying very high administrative costs to the network links connecting the traffic control manager 110 and the adjacent routers 120, which should be higher than the cumulative cost of the most costly end-to-end path in the network. This would lead the Dijkstra algorithm run by network routers to ignore routes involving the traffic control manager 110 as a router.

^{~} The second solution would consist in setting in the OSPF messages originating from the traffic control manager 110 a different value of the Router ID for each interface of the traffic control manager 110. The rationale for this is that the Router ID field is used to unequivocally identify a router in a network and to correlate network interfaces belonging to the same router. As a result, if the traffic control manager 110 sets a dedicated value of Router ID for each of its N network interfaces, other OSPF routers 120 of the network 100 would recognise the traffic control manager 110 as N single-interface routers rather than one N-interfaces router. As a consequence, no packets would be sent to it for forwarding.

In addition, another issue related to the exploitation of OSPF for calculating third-party traffic routes lies in the potential limited scope of the network topology that can be acquired by the traffic control manager 110 if the network is divided into OSPF areas. In fact, in this case, each router would only be able to acquire topological information related to the area(s) to which it belongs. To address this issue, a solution could be represented by deploying the traffic control manager 110 as an Area Border Router topologically belonging to all (or at least most of) the areas into which the network is divided. As a result, the traffic control manager 110 would be able to learn the topologies of all the areas to which it belongs by analysing the content of the LSA update messages received from neighbouring routers, which belong to different areas. Such a mechanism would require the traffic control manager 110 to be equipped with as many physical or virtual network interfaces as the number of areas it belongs to.

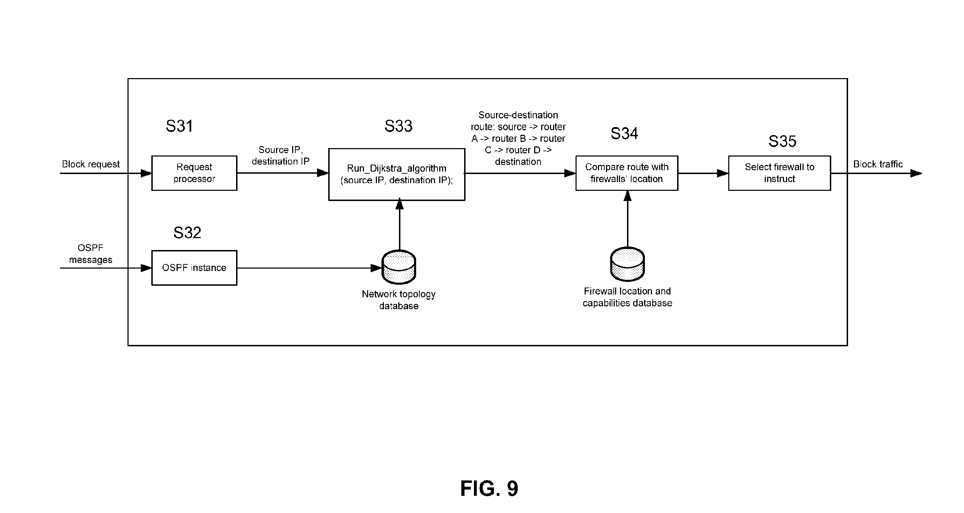

An example of the operation of the traffic control manager 110 according to an embodiment of the invention is schematically illustrated in FIG. 9. The traffic control manager receives a block request S31 from a victim as well as OSPF messages S32 from neighbouring routers. The information included in the block request such as Source IP and destination IP as well as network topology information related to the OSPF messages is input to a Dijkstra algorithm in step S33 to calculate a route of the malicious traffic from the source IP to the destination IP via certain routers. The calculated route is compared in step S34 with the location of firewalls stored in a firewall location and capabilities database and in step S35 a firewall on the route is selected to mitigate (for example block) the malicious traffic.

In alternative embodiments of the invention, if the network 100 uses packet switching mechanisms, such as Multiprotocol Label Switching (MPLS), the identification of the path traversed through the network 10 by specific traffic flows is easier. In fact, traffic routes are statically defined and configured onto the MPLS nodes. As a result, the traffic control manager 110 could simply be provisioned with the switching configuration of the MPLS domain in order to detect the routing of packets.

Even in this case, however, failures in network elements can lead to dynamic changes in the routes taken by traffic flows. The backup paths covered by traffic flows in case of failures are statically provisioned onto the MPLS nodes. Therefore, if the traffic manager 110 is aware of the complete definition of network's backup paths and is informed when a network failure occurs, it can know which paths are taken in case of failures. With respect to the knowledge of backup paths, the traffic control manager 110 can be statically provisioned with that information. With respect to the knowledge of failures taking place in the network, the MPLS nodes can report this information to the traffic control manager 110 in various ways, including, for instance, by the utilisation of Simple Network Management Protocol (SNMP) traps.

The traffic control manager 110 is able to receive request messages coming from other network entities and to process them accordingly. Such requests are sent to the traffic control manager 110 with the aim of requesting it to enforce policies on packets with specific characteristics at a convenient point of the network.

The request messages may be delivered from the originating network entity to the traffic control manager 110 in a number of different ways. For instance, they could be delivered to one of the IP addresses that the traffic control manager 110 is using to gather network topology information. Alternatively, a different bearer could be used. For instance, both the module originating the requests and the traffic control manager could be equipped with GSM/UMTS interfaces and they could exchange messages via Short Message System (SMS). In addition, some forms of authentication, encryption or integrity check may be used for the exchange of request messages.

The request messages sent to the traffic control manager 110 contain the details of the packets on which the traffic control manager 110 is requested to act as well as the actions that the traffic control manager 110 should apply to them.

The specifications of the traffic that may be subject to the policy enforcement should be as detailed as much as possible to allow the traffic control manager to accurately identify it in the network. This information should include at least source and/or destination hosts' or networks' IP addresses. In addition, it could include additional information such as, but not limited to, transport layer protocol used, transport layer source and/or destination port or application layer protocol information.

The action that the traffic control manager 110 could be expected to apply on the specified traffic should be an action for which entities are available within the network 100 to execute it and for those entities that can be remotely controlled by the traffic control manager 110. For instance, possible actions may include dropping packets with specific characteristics. This action may be executed by firewalls 130. Other possible actions might include slowing down some specific traffic if traffic shapers are available in the network.

Upon the reception of those messages, the traffic control manager 110 can act in different ways to accomplish the request received.

A request received may be executed by acting on one firewall 130 (or other appropriate devices, such as traffic shapers) present in the path through the network 100 currently traversed by the traffic specified in the request. In addition, after the execution of the operation, the traffic control manager 110 may continue monitoring the network 100 for changes in its topology. If it detects a change in the topology that would result in the activated firewall 130 (or other device) to be bypassed, the traffic control manager 110 can recalculate the path covered by the traffic and act on an appropriate device 130 to re-enforce the desired policy on the same traffic.

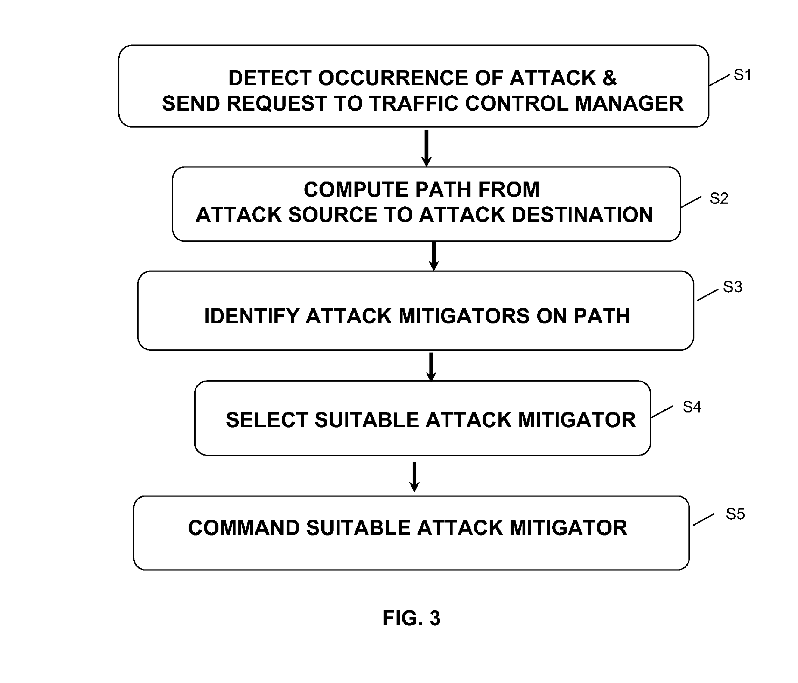

Operation of the embodiment of the invention will now be described with reference to Figures 2A to 2E and FIG. 3. Let us suppose that an attack is taking place in IP network 100 on a victim 150 and a firewall 130_1 present between the victim and the network 100 identifies the occurrence of the attack. The attack involves an attacker 160 connected to the network 100 transmitting a large quantity of apparently legitimate traffic to the victim 150 with the aim of overloading its network resources. In step S1 the network entity which in this case is firewall 130_1 identifies the occurrence of the attack and communicates the details of that attack to a traffic control manager 110 as illustrated in FIG. 2A.

In some embodiments of the invention a computer system or, more generically, any IP network entity may detect the occurrence of an attack. The way in which a network entity can detect the presence of an attack is already known to the skilled man and consequently will not be described in detail in the context of the present invention.

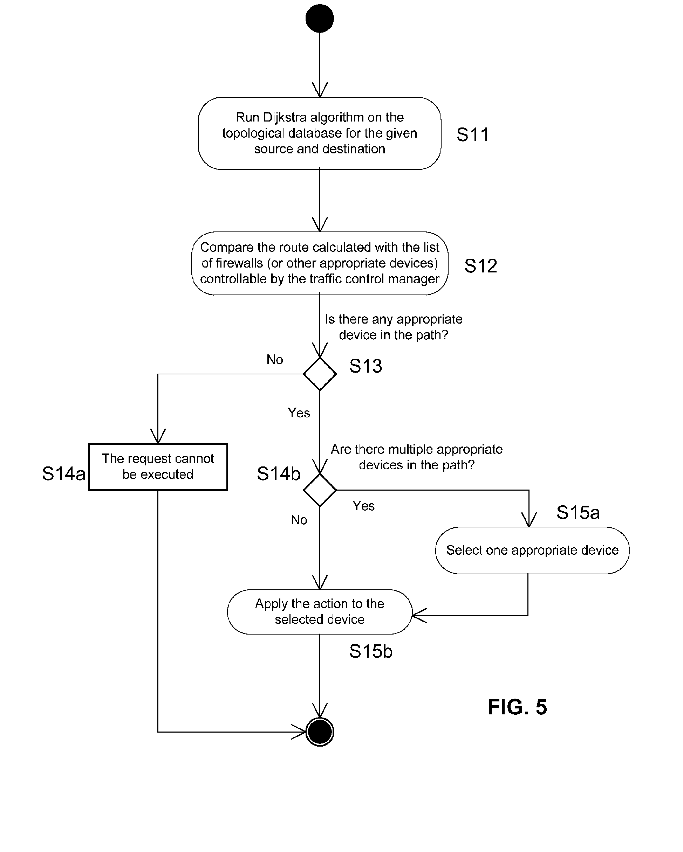

In step S2 the traffic control manager 110, which has knowledge of the instantaneous topology of the network 100, computes the path covered by the malicious traffic through the network 100 (or part of it) as illustrated in FIG. 2B according to the source IP address of the attacker 160 and the destination IP address of the victim 150. In this embodiment of the invention the network 100 adopts an OSPF as a routing protocol. More specifically, with reference to FIG. 5 in step S11 the network manager 110, upon reception of the request message, runs a Dijkstra algorithm on the network topological database to determine the path covered by the specific traffic on which firewall 130_1 has requested actions to be taken.

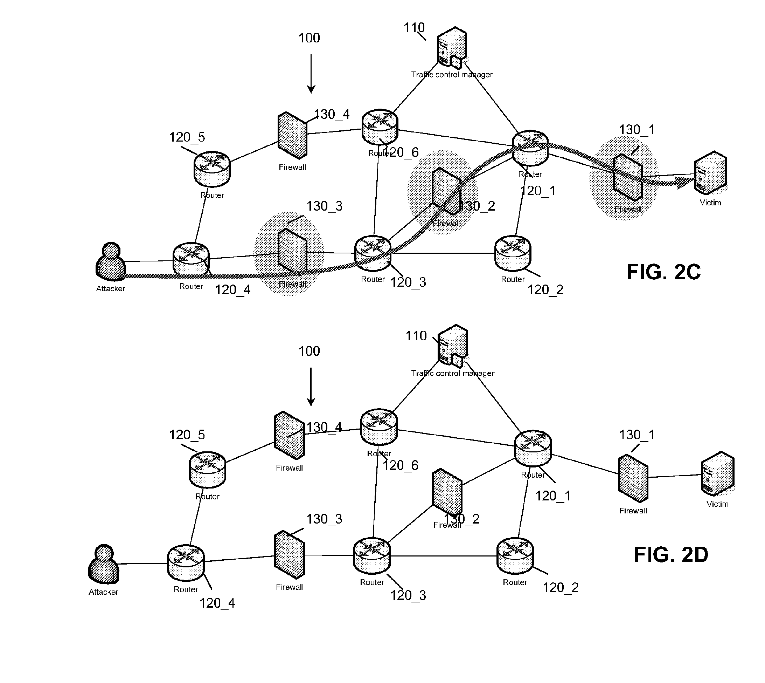

In step S3 as illustrated in FIG. 2C the traffic control manager 110 identifies all the firewalls 130 (or other devices capable of mitigating the attack, such as traffic shapers) located in the path between the attacker 160 and the victim 150. With reference to FIG. 4 this is achieved by comparing the path obtained in step S11 with a database of firewalls (or other appropriate devices) which are available and remotely controllable, to determine if one or more of those attack mitigation entities are present on the path covered by the malicious traffic - steps S12-513. If one or more firewalls 130_i (or other appropriate devices) are present, they are inserted into the logical representation of the path. Otherwise, in step S14a if no firewalls 130_i (or other appropriate devices) are present, on the path a reply to the request message indicating that no actions can be undertaken is sent to the firewall 130_1 or the request message is simply dropped.

In step S4 as illustrated in FIG. 2D if it is determined in step S14b that multiple firewalls (130_1, 130_2, 130_3) are located on the path of the traffic the most suitable firewall 130_i (or other appropriate device) on the determined traffic path that can block the malicious traffic is selected (S15a). Otherwise if only one suitable attack mitigation device is present on the path, that attack mitigation device is selected in step S15b. If multiple firewalls (or other appropriate devices) are available to accomplish the request, the traffic control manager 110 selects the most suitable to accomplish the request based on different parameters. For example, in one embodiment of the invention if the action to be performed is to drop or reduce the traffic, the traffic control manager may select the closest device to the source of the traffic, as this would minimise the amount of traffic carried by the network 100. In the present example this would be firewall 130_3. However, the choice of attack mitigation entity could be made on the basis of other criteria, Other criteria that may be used to select the most suitable device might include their current load to select the least loaded firewall 130_i, the size of the set of policies currently applied to them to select the firewall with the shortest ruleset 130_k or a combination of all or some of the above.

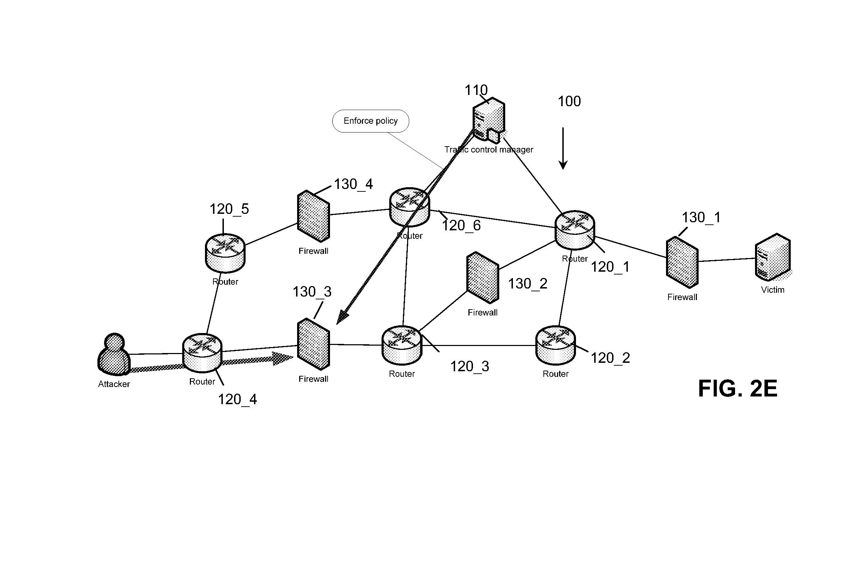

In step S5, as illustrated in FIG. 2E the traffic control manager 110 sends a message to the firewall 130_3 designated in step S4 requesting the firewall 130_3 to enforce the action, which in this case is blocking, on the specified traffic. Moreover in this case, the traffic control manager 110 may deliver the message to the controlled device 130_3 in different ways, including using the IP interfaces to collect topological information or other communication mechanisms.

In addition to the steps of the method described above, the embodiment of the invention provides mechanisms to maintain a consistent protection even if network failures occur after the successful execution of step S5. In fact, in the case where one or more network entities fail, the routes taken by traffic flows affected by the failure can change dynamically. As a result, malicious traffic between the attacker 160 and the victim 150 may be rerouted to a path that does not comprise the firewall S130_3 instructed at step S5. To overcome this issue, embodiments of the invention define the two following mechanisms that can be alternatively used to address this issue.
a. The first mechanism consists in the traffic control manager executing steps S2 to S4 recursively. This would allow to identify all the potential paths that can be covered by malicious traffic in case of failures and to identify a set of firewalls such that, whatever route is taken by malicious traffic, there is always at least one firewall in the path instructed to block it. After that, the traffic control manager sends the request of step S5 to all the firewalls identified. The algorithm for identifying the set of firewalls to instruct is always convergent as long as all the potential attacker-victim paths in the networks are equipped with a firewall controllable by the traffic control manager.
b. The second mechanism consists in the traffic control manager monitoring the status of the network and the controlled firewall 130_3 after the successful execution of step S5 to detect if changes in the network 100 take place affecting the routing of the traffic on which a policy has been previously applied.. In case an event takes place that causes the malicious traffic to be rerouted on a path not including the instructed firewall, the traffic control manager identifies the most suitable firewall on the new path, as explained in step S3, and instructs it to block the malicious traffic.

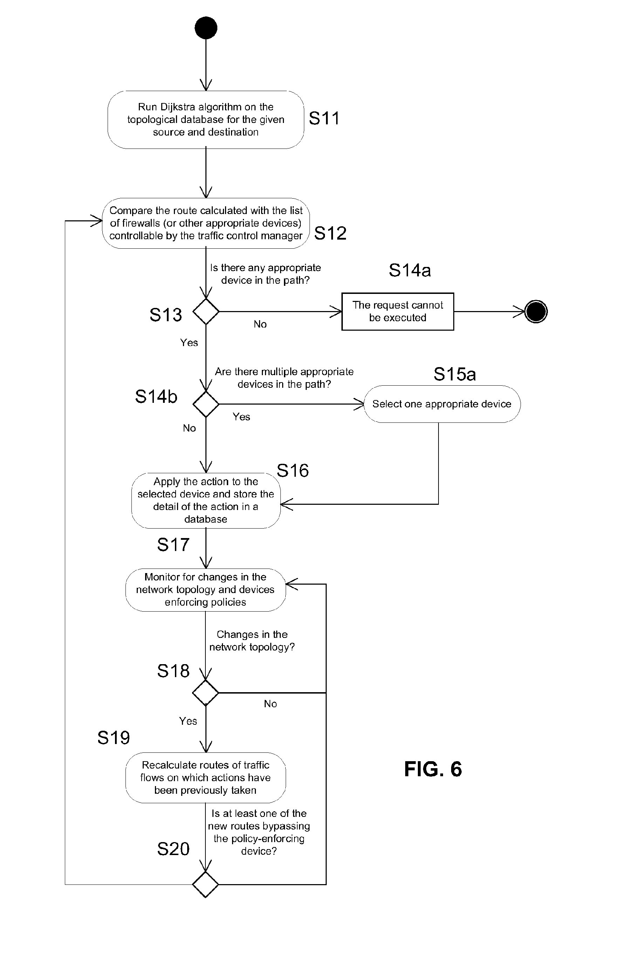

In terms of the second mechanism the way in which the traffic control manager 110 may monitor the status of the network is by maintaining a database in which it stores all the traffic flows on which actions have been taken as well as the firewall (or other appropriate device) which has enforced it. Anytime a change in the network topology or a failure in one of the firewalls (or other policy-enforcing devices) occurs, the traffic control manager 110 may recalculate the routes related to all the traffic flows on which actions have been taken. If any of those traffic flows are no longer routed through the device enforcing the actions related to it, the traffic control manager 110 can rerun the 5-step algorithm described above with the new topological data for each of the rerouted traffic flows, as illustrated in FIG. 6. In additional steps S16 to S20 of FIG. 6 the detail of the action undertaken is stored in a database in step S16, the network is monitored for changes in network topology and the devices enforcing the requested policies (step S17). If in step S18 it is determined that changes have taken place in the network topology, the routes of the traffic flow on which actions have previously been taken are recalculated in step S19. If it is determined in step S20 that one of the new calculated routes bypasses the device 130_3 enforcing the requested policy, the operation returns to step S12 where the route recalculated in step S19 is compared with the list of attack mitigation devices in order to determine the most appropriate device to perform the mitigating action.

In terms of the first mechanism the solution to mitigate the effect of route changes in the effectiveness of the policies enforced may consist in acting simultaneously on multiple firewalls (or other appropriate attack mitigation devices) in order that, whatever the route taken by the traffic as a consequence of failures there will be at least one device in the path already enforcing the desired policy.

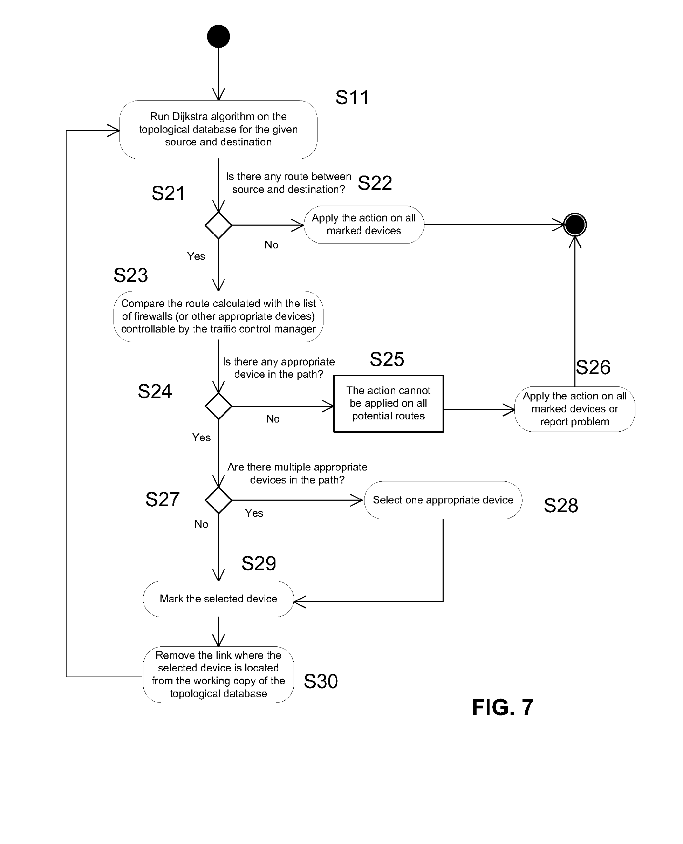

To identify the set of firewalls (or other appropriate devices) capable of blocking all the possible routes from a pre-defined source to a pre-defined destination, the traffic control manager can behave as described below and illustrated in the FIG. 7.

The traffic control manager 110 runs the steps S1 to S4 of the 5-step algorithm as illustrated in FIG.3. After identifying the firewall (or other appropriate device) at step S4, the traffic control manager 110 marks the indentified firewall 130_3 and removes the link where the firewall 130_3 is located from the copy of the topological database it is using to run this algorithm. Then, the traffic control manager cyclically runs steps S2 to S4 on the edited topological database and marks once again the firewall selected at step S4 until one of the following events take place:
1. There are no more possible routes from the source of the attack to the destination of the attack. In this case, all the firewalls have been identified. The traffic control manager 110 can send the request described at step S5 of the algorithm above to all the marked firewalls and stop the cycle.
2. The traffic control manager finds a route where no firewalls (or other appropriate devices) are available. In this case, it means that the network topology includes routes not protected by appropriate devices. In this case, the traffic control manager could either send the request described at step S5 of the algorithm above to all the firewalls marked so far or send a notification of this situation to the network entity that initially requested the action.

With reference to FIG. 7 in step S21 of this embodiment of the invention it is determined if there is any route through the network 100 between the source of the attack and the destination of the attack, the source of the attack and the destination of the attack being identified by their respective IP addresses. If it is determined there are no more possible routes from source of the attack to the destination of the attack, in step S22 the attack mitigation request is sent to all marked firewalls and the cycle is stopped.

If is determined that there is a route between the attack source and the attack destination, in step S23 the calculated route is compared with the list of firewalls. In step S24 it is determined if there is an appropriate attack mitigation device on the path, if no, the attack mitigation action cannot be applied on all potential routes in step S25 and so the action is applied on all marked devices in step S26 or the problem of the action not being able to be applied on all potential routes is reported. Otherwise, if it is determined that there is an appropriate attack mitigation device on the calculated path it is determined in Step S27 if there are multiple appropriate devices in the path. If yes, an appropriate device is selected from among the multiple appropriate devices in step S28 and then marked in step S29. Otherwise the only appropriate attack mitigation device is marked in step S29. The link where the selected attack mitigation device is located is removed form the copy of the topological database used to execute this task, and the method returns to step S11 where the Dijkstra algorithm is run once again to determine a route between the attack source and attack destination.

As previously described, the traffic control manager 110 can enforce policies upon the reception of requests from other network entities which specify the description of the traffic on which policies are to be enforced (e.g. source/destination IP address, transport layer protocols, etc...) and the action to be performed on it (e.g. drop it, slow it down, etc...).

Such requests originate from a request module running on a network entity which could be, for example, a router, an application server, a firewall or a host. The request module is triggered by the occurrence of specific conditions that require the traffic control manager to take actions.

An example could be the following. An IP host, such as an application server is equipped with the abovementioned module. At a certain point, the server is under a security attack. The server triggers the module with the detail of the malicious traffic (e.g. source and destination IP address). The request module then communicates to the traffic control manager 110 the detail of the malicious traffic requesting it to drop the traffic before reaches the server.

The actual requests of enforcing policies on a specific traffic are executed by an action module that is embedded in a network node capable of controlling the forwarding of the traffic - an attack mitigation entity such as a firewall or a traffic shaper, for example. This action module receives a request message from the traffic control manager 110 and applies the requested rule on the physical entity on which it is running. After the execution of the requests, it can send a response message to the traffic control manager 110 notifying the successful execution of the request or the possible occurrence of errors.

In addition, the action module may also be capable of autonomously notifying the traffic control manager 110 if a problem occurs in the node in which it is located which might affect the enforcement of the requested policies after the initial enforcement.

This module could also be implemented as a Simple Network Manager Protocol (SNMP) agent, controlled by an SNMP manager embedded in the traffic control manager.

Some additional issues may need to be addressed in further embodiments of the invention, for example in the case where the IP address of the attacker 160 is changing, or in the case where the IP address of the attacker 160 is the same, but the port of the attack keeps on changing.

In the case of proxies and NA(P)T (Network Address (Port) Translation) devices, the problems in this situation are that if the attacker is behind one of these devices, the source IP address presented to the victim is not the real IP address of the attacker but the address of the proxy/NAT. Therefore blocking the traffic from that IP address may also prevent legitimate users located behind the same proxy/NAT from sending legitimate traffic to the victim. To address this issue, the following is proposed:
The devices in the network 100 that can be controlled by the traffic control manager 110 are not only the firewalls 130. Controllable devices may also include devices able to act on traffic forwarding, such as proxies, NATs, gateways, routers etc. Therefore the database of attack mitigation devices stored at the traffic control manager 110 may contain not only firewalls but also such other devices. For each attack mitigation device, the location of the device in the network 100 and its capabilities can be listed in the database. Therefore, if the source IP address of the attacker corresponds to a proxy/NAT controllable by the traffic control manager 110, the traffic control manager 110 can request the proxy/NAT to block only the specific host generating malicious traffic. This can be done if the victim 150 also specifies in the description of the malicious traffic the timestamp of the attack and the source and/or destination port and/or, possibly, some further identifiers that could help to identify a specific user behind NAT. Such identifiers might include, for instance, the Call-ID of SIP calls. In this way, the proxy/NAT, with this data, has enough information to identify the specific host who generated the attack and block it. This procedure would bring benefits not only to the victim but also to the other users of the proxy/NAT because the blocking of malicious traffic would increase the quality of service provided to legitimate users of the proxy/NAT.

It will be appreciated that the timestamp that is reported to the traffic control manager by the victim or by a firewall in the path may be slightly different from the timestamp recorded at the proxy/NAT. Due to the delay taken to transfer the traffic from the proxy/NAT to the node which detected the attack, the timestamp reported to the traffic control manager could be from some milliseconds to few seconds later than the one recorded at the proxy/NAT when the malicious traffic had been forwarded. In addition, the imperfect synchronisation of clocks among network hosts can add some additional mismatch between timestamps.

Such factors can be taken into account when comparing the time stamp reported by the victim/firewall and the time stamp recorded at the proxy/NAT. The effectiveness of the technique lies in the fact that the proxy/NAT has an extremely large pool of source ports available. In addition, a same source port can be reused only after a specific host has stopped using it and even after that, the period of time after which a same port is reused is very long, significantly longer than any potential mismatch between a time stamp reported by the victim/firewall and a time stamp recorded at the proxy/NAT. Therefore, the probability that, at a point of time close to the timestamp reported to the proxy/NAT, another host behind the proxy/NAT has been assigned the same source port and has sent some packets to the same victim on the same port using the same transport layer protocol (TCP, UDP etc...) is practically impossible. For this reason, the proxy/NAT has got enough information to unequivocally identify the exact source of the attack.

It can be sometimes be assumed that, even if the attacking host is behind a proxy/NAT and the entire traffic between that proxy/NAT and the victim is blocked, the probability that legitimate users are affected is very low, because it is rare that a host under the same proxy/NAT of the attacker needs to communicate at the same time with the same host victim of the attacker.

In the case where the attacker is a Mobile IP (MIP) Mobile Node (MN), the attacker can change its location across the network 100. Two scenarios are possible.
1) The attacker may always use a single source IP address to send packets (Home Address - HoA). In this case, if it changes its location, it will be assigned a different IP address (Care-of address - CoA) but will send all its packets tunnelled to the Home Agent (a router in its home network), which will then forward the traffic to the victim showing the HoA as source address.
2) The attacker, when it changes location, informs also to the victim (Correspondent Node - CN) about the change of its location. In this case, the attacker will directly send messages from its CoA to the victim (CN).

In the first case, the problem can be simply addressed by blocking the traffic between the attacker's HoA and the victim and this would work even if the attacker changes location. In addition to this, if the traffic control manager 110 has control over the Home Agent (HA), the traffic control manager 110 can request the Home Agent to provide the CoA of the attacker and then the traffic control manager could further block the path between attacker's CoA and HA to minimise the impact of malicious traffic load on the network.

In the second case, the victim can simply iteratively report the IP address of the attacker every time it changes its location in order to keep the victim protected even when the attacker changes its location.

In certain cases the source UDP/TCP port of the attack changes. Examples include a "TCP SYN flood" attack, where the attacker attempts to initiate a large number of TCP connections with a victim where all the requests have a different source port. Two scenarios are possible.
1) The source IP address is the actual IP address of the attacker's host. In this case all the traffic coming from that specific address can be blocked regardless of the source TCP/UDP port.
2) The source IP address is actually the IP address of a proxy/NAT. In this case, the attack can be effectively blocked without compromising legitimate users, by applying the same principle discussed above in proxy/NAT cases.

The methods according to the various embodiments of the invention enable the undesirable effects of a malicious attack in a network to be minimized while causing the least disruption possible to other legitimate users of the network.

Those skilled in the art will recognise that embodiments of the invention described above can handle effectively the cases of both DoS attacks aimed at network resources overloading and attacks carried out within encrypted tunnels.

With the methods according to embodiments of the invention, DoS attacks can be avoided if a network entity affected by the network resource overload, such as a firewall, a host or a router informs the traffic control manager of the attack taking place. The traffic control manager, which has control of the network (or at least part of it), can block the closest firewall to the attacker, so that the victim is no more reached by the malicious traffic.

An example could be represented by the following case. An attack is taking place against a corporate private network. A firewall located at the boundary between the corporate private network and an ISP's network detects the malicious traffic and blocks it. However, the link between corporate and ISP is being overloaded because of the large amount of malicious traffic being delivered. The corporate firewall then reports it to the ISP's traffic control manager, which blocks the traffic well before reaching the corporate firewall's interface. As a result, the corporate network is now safe and the ISP network has more spare capacity because it does not carry the malicious traffic all the way down to the victim anymore.

Moreover, attacks carried out within encrypted tunnels can be addressed by embodiments of the invention. Indeed, in this case, the attack could be identified only by endpoints, because they are the only network elements able to decrypt the content of those packets. For this reason, if there are no static firewall rules preventing it, the victim endpoint would receive malicious traffic unfiltered by firewalls in the path, with serious security risks. The methods described according to the embodiments of the invention allow a victim, once he has identified the threat taking place, to inform the traffic control manager, which can then block the malicious traffic well before reaching the victim. As a result, the victim is safer and the network is less loaded because undesired traffic has been prevented from traversing the network.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method of controlling traffic in a network, the method comprising:
identifying the presence of undesirable traffic in the network;
determining the route taken by the undesirable traffic through the network from the source of an attack to the target of the attack according to a topology of the network;
identifying any operable attack mitigation entities present in the route taken by the undesirable traffic;
selecting, according to a predetermined criteria, at least one optimal operable mitigation entity from among the identified mitigation entities for disrupting the flow of the malicious traffic to the target; and
requesting the at least one optimal mitigation entity to act to disrupt the flow of the malicious traffic to the target.

2. A method according to claim 1, wherein the selected operable attack mitigation entity is a firewall which is requested to reduce the flow of traffic by blocking the traffic; or a traffic shaper which is requested to reduce the flow of traffic by slowing the traffic down.

3. A method according to claim 1 or claim 2 wherein the operable attack mitigation entity located nearest the source of the attack is selected.

4. A method according to any one of the preceding claims wherein the network entity determining the route taken by the malicious traffic is connected to one or more routers of the network and is configured to appear as a router to the or each router such that it receives notifications about links in the network from the or each router thereby enabling it to acquire knowledge of the current network topology.

5. A method according to any one of the preceding claims wherein the IP address of the source of the attack and the IP address of the target of the attack are identified and used to determine the route taken by the malicious traffic through the network.

6. A method according to claim 5 wherein the timestamp of the attack is used to determine the host of the attack in the case where the source IP address is shared between one or more hosts.

7. A method according to any one of the preceding claims wherein if the source of the attack is a mobile node a Home Address and/or a care of Address of the mobile node is used to determine the source of the attack.

8. A method according to any one of the preceding claims wherein a plurality of routes through the network from the source of an attack to the target of the attack are determined and an optimal operable mitigation entity is selected for each of the determined routes, and wherein each of the optimal operable mitigation entities is requested to act to disrupt the flow of traffic.

9. A network entity for controlling traffic in a network, the network entity comprising:
a memory for storing information on the topology of the network and operable attack mitigation entities in the network;
message exchange means for exchanging messages with other network entities in the network,
a route processor for determining the route taken by undesirable traffic through the network from the source of an attack to the target of the attack according to the topology of the network and for identifying any operable attack mitigation entities present in the route taken by the undesirable traffic;
a selector for selecting, according to a predetermined criteria, at least one optimal operable mitigation entity from among the identified mitigation entities for disrupting the flow of the malicious traffic to the target; and
control means for controlling the at least one optimal mitigation entity to act to disrupt the flow of the malicious traffic to the target.

10. A network entity according to claim 9 wherein the selector is configured to select the operable attack mitigation entity located nearest the source of the attack.

11. A network entity according to claim 9 or 10 wherein the network entity is connected to one or more routers of the network and is configured to appear as a router to the or each router such that it receives notifications about links in the network from the or each router thereby enabling it to acquire knowledge of the current network topology.

12. A network entity according to claim 11, wherein the network entity is configured to transmit OSPF messages having a different router ID for each network interface of the network entity.

13. A network entity according to claim 11 wherein the network entity is configured to be seen as by other routers in the network as an undesirable router for transferring traffic through the network.

14. A network entity according to any one of claims 9 to 13 in which the route processor is configured to recalculate potential traffic flow routes in the case where a change in network topology occurs.

15. A computer-readable medium having computer-executable instructions to enable a computer system to perform the method of any one of claims 1 to 8.
